# EUROPÄISCHE PATENTSCHRIFT

(11) **EP 0 269 963 B1**
(45) Veröffentlichungstag und Bekanntmachung des Hinweises auf die Patenterteilung: **22.02.1995**
(21) Anmeldenummer: 87117131.0
(22) Anmeldetag: 20.11.1987
(51) Int. Cl.: C09K 19/34

(54) **Ferroelektrische Flüssigkristalle**
Ferroelectric liquid crystals
Cristaux liquides ferroélectriques

(30) Priorität: 28.11.1986 CH 4773/86; 23.09.1987 CH 3676/87
(43) Veröffentlichungstag der Anmeldung: 08.06.1988
(73) Patentinhaber: F. HOFFMANN-LA ROCHE AG, 4002 Basel (CH)
(72) Erfinder: Buchecker, Richard, Dr., CH-8008 Zürich (CH); Fromm, Hans-Jürgen, Dr., D-7850 Lörrach (DE); Kelly, Stephan, Dr., CH-4313 Möhlin (CH); Schadt, Martin, Dr., CH-4411 Seltisberg (CH); Villiger, Alois, Dr., CH-4055 Basel (CH)
(74) Vertreter: Cottong, Norbert A.

(56) Entgegenhaltungen:
- EP-A- 0 087 679
- EP-A- 0 154 840
- WO-A-86/03769
- WO-A-87/05018
- WO-A-88/02018
- FR-A- 2 444 071
- US-A- 4 200 580
- US-A- 4 313 878

## Beschreibung

Die vorliegende Erfindung betrifft neue flüssigkristalline Gemische mit ferroelektrischen Eigenschaften, deren Verwendung für elektro-optische Zwecke und neue Verbindungen für diese Gemische.

Flüssige Kristalle werden vor allem als Dielektrika in Anzeigevorrichtungen eingesetzt, da die optischen Eigenschaften solcher Substanzen durch eine angelegte Spannung beeinflusst werden können. Elektro-optische Vorrichtungen auf der Basis von Flüssigkristallen sind dem Fachmann gut bekannt und können auf verschiedenen Effekten beruhen, wie beispielsweise der dynamischen Streuung, der Deformation aufgerichteter Phasen (DAP-Zelle), dem Schadt-Helfrich-Effekt (TN-Zelle [twisted-nematic] und STN-Zelle [super twisted-nematic]), dem Gast/Wirt-Effekt (Guest/Host-Zelle), einem cholesterisch-nematischen Phasenübergang (Phase-Change-Zelle) oder dem SBE-Effekt (super birefringence effect). Die Ansprechzeiten solcher Anzeigevorrichtungen liegen im allgemeinen in der Grössenordnung von mehreren Millisekunden oder höher.

Es wurde kürzlich gefunden, dass die Ansprechgeschwindigkeiten deutlich verbessert werden können durch Verwendung von Anzeigevorrichtungen auf der Basis von Flüssigkristallen mit ferroelektrischen Eigenschaften. Hierbei können grundsätzlich verschiedene chirale smektische Flüssigkristalle mit ferroelektrischen Eigenschaften verwendet werden, wie beispielsweise Flüssigkristalle mit smektisch C, F oder I Phasen. Als besonders geeignet haben sich jedoch Flüssigkristalle mit chiralen smektisch C Phasen erwiesen.

Es sind bisher vergleichsweise wenig Flüssigkristalle mit ferroelektrischen Eigenschaften bekannt. Die bekannten Materialien besitzen zudem meist ähnliche Molekülstrukturen und erlauben daher nur eine beschränkte Variation der Eigenschaften von Gemischen. Ferner besitzen die bekannten Flüssigkristalle häufig eine ungenügende chemische und thermische Stabilität oder nur relativ enge oder bei hohen Temperaturen liegende chirale smektische Phasen. Es besteht daher ein grosser Bedarf an weiteren geeigneten Materialien insbesondere im Hinblick auf die weitere Verbesserung ferroelektrischer Flüssigkristallgemische.

Gegenstand der vorliegenden Erfindung ist ein flüssigkristallines Gemisch mit ferroelektrischen Eigenschaften enthaltend mindestens 2 Komponenten, dadurch gekennzeichnet, dass mindestens eine Komponente eine Verbindung der allgemeinen Formel 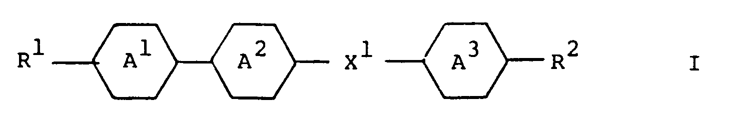
worin X¹ eine einfache Kovalenzbindung, -COO-, -OOC-, -CH₂CH₂-, -OCH₂- oder -CH₂O- bezeichnet; einer der Ringe A¹, A² und A³ trans-m-Dioxan-2,5-diyl darstellt, und die beiden andern der Ringe A¹, A² und A³ unabhängig voneinander unsubstituiertes oder mit Cyano, Halogen oder Niederalkyl substituiertes 1,4-Phenylen darstellen; R¹ und R² unabhängig voneinander eine gegebenenfalls halogensubstituierte Alkylgruppe mit bis zu 18 Kohlenstoffatomen bedeuten, worin gegebenenfalls 1 oder 2 nicht benachbarte CH₂-Gruppen durch -O-, -CO-, -COO- und/oder -OOC-ersetzt sind,
ist.

Aus EP-A-0 154 840, EP-A-0 087 679, US-A-4 313 878, US-A-4 200 580 und FR-A-2 444 071 sind zwar bereits gewisse Dioxanderivate bekannt, welche jedoch bisher nur als nematische Flüssigkristalle verwendet werden konnten.

Ein bevorzugter Aspekt betrifft die Verwendung von mindestens einer optisch aktiven Verbindung der Formel I, worin R¹ und/oder R² ein chirales Kohlenstoffatom aufweist.

Die Verbindungen der Formel I mit längeren Seitenketten R¹ und/oder R² besitzen im allgemeinen vergleichsweise breite smektisch C und/oder smektisch A Phasen und sind daher sehr gut als Komponenten für ferroelektrische Gemische, insbesondere für Gemische mit einer chiral smektisch C Phase geeignet. Die Verwendung der Verbindungen mit smektisch A Phasen erleichtert unter anderem eine homogene Orientierung des Flüssigkristalls und kann auch den ferroelektrischen Bereich des Gemisches erweitern. Die Verbindungen der Formel I mit kurzen Seitenketten R¹ und R² besitzen oft nur monotrope oder virtuelle Phasen, sind aber ebenfalls geeignet die Eigenschaften ferroelektrischer Gemische zu verbessern und können den chiral smektischen Bereich nach tieferen Temperaturen verschieben.

Die Verbindungen der Formel I besitzen eine gute chemische und thermische Stabilität und eine niedere Viskosität. Sie sind untereinander und mit bekannten Flüssigkristallen, insbesondere mit bekannten ferroelektrischen Flüssigkristallen gut mischbar.

Der Ausdruck "Halogen" bedeutet im Rahmen der vorliegenden Erfindung Fluor, Chlor, Brom oder Jod. Der Ausdruck "Niederalkyl" bedeutet Alkylgruppen mit 1-5 Kohlenstoffatomen, wie Methyl, Aethyl, Propyl, Isopropyl.

Der Ausdruck "aromatischer Ring" umfasst substituiertes oder unsubstituiertes 1,4-Phenylen und Pyrimidin-2,5-diyl. Der Ausdruck "gesättigter Ring" umfasst trans-m-Dioxan-2,5-diyl und trans-1,4-Cyclohexylen.

In Formel I vorhandene 1,4-Phenylen-Gruppen sind vorzugsweise unsubstituiert. Gewünschtenfalls können jedoch durch Verwendung substituierter 1,4-Phenylengruppen, wie 2-Methyl-1,4-phenylen, 2-Fluor-1,4-phenylen, 2-Cyano-1,4-phenylen und 2,3-Dicyano-1,4-phenylen, die Umwandlungstemperaturen, die Löslichkeit, die dielektrische Anisotropie modifiziert werden.

Eine gegebenfalls für X¹ vorhandene Gruppe -COO-, -OOC-, -OCH₂- oder -CH₂O- ist vorzugsweise mit dem Sauerstoffatom an einen aromatischen Ring gebunden. Falls X² die Gruppe -CH₂CH₂- bedeutet, ist vorzugsweise einer der Ringe A² und A³ ein gesättigter Ring.

Im allgemeinen sind diejenigen Verbindungen der Formel I bevorzugt, worin einer der Ringe A¹ und A² trans-m-Dioxan-2,5-diyl darstellt, der andere der Ringe A¹ und A² einen gegebenenfalls substituierten 1,4-Phenylenring bedeutet und Ring A³ für gegebenenfalls substituiertes 1,4-Phenylen steht. Besonders bevorzugt sind diejenigen Verbindungen der Formel I, worin Ring A¹ für trans-m-Dioxan-2,5-diyl, Ring A² für gegebenenfalls substituiertes 1,4-Phenylen und Ring A³ für gegebenenfalls substituiertes 1,4-Phenylen steht. Der Dioxanring ist vorzugsweise in 2-Stellung mit einem gegebenenfalls substituierten 1,4-Phenylenring verknüpft.

Eine besonders bevorzugte Gruppe von Verbindungen der Formel I sind die Verbindungen der allgemeinen Formel 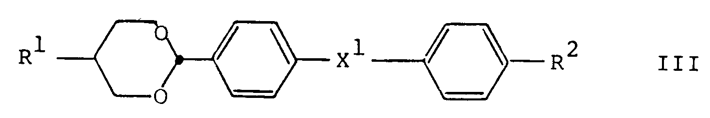
worin X¹, R¹ und R² die obigen Bedeutungen haben, insbesondere diejenigen, worin X¹ eine einfache Kovalenzbindung oder -OOC- bezeichnet.

Diejenigen achiralen Verbindungen der Formeln I und III, worin R¹ und R² unabhängig voneinander achirales, vorzugsweise geradkettiges Alkyl, Alkoxy, Alkanoyl, Alkanoyloxy oder Alkoxycarbonyl bedeuten, und diejenigen chiralen Verbindungen der Formeln I und III, worin einer der Reste R¹ und R² chirales Alkyl, Alkoxy, Alkanoyl, Alkanoyloxy oder Alkoxycarbonyl und der andere der Reste R¹ und R² chirales oder nicht chirales, geradkettiges oder verzweigtes Alkyl, Alkoxy, Alkanoyl, Alkanoyloxy oder Alkoxycarbonyl bedeuten, sind im allgemeinen bevorzugt und synthetisch leicht zugänglich. Besonders bevorzugt sind die Alkyl- und Alkoxygruppen. Insbesondere steht in den obigen Formeln I und III vorzugsweise R¹ für Alkyl und R² für Alkoxy. Vorzugsweise können ferner R¹ und/oder R² eine oder mehrere Halogensubstituenten aufweisen, d.h. Chloralkyl, Chloralkoxy, Fluoralkyl, Fluroalkoxy, Chloralkoxycarbonyl, Fluoralkoxycarbonyl, Chloralkanoyloxy, Fluoralkanoyloxy bedeuten.

In R¹ und/oder R² gegebenenfalls vorhandene Gruppen -O-, -CO-, -COO- und -OOC- müssen jedoch nicht direkt an Ring A¹ bzw. A³ gebunden sein, sondern können auch an anderer Stelle in der Kette auftreten. Beispiele solcher Gruppen sind Alkoxyalkyl, Alkoxyalkoxy, Alkoxyalkanoyloxy, Alkoxyalkoxycarbonyl, Alkanoyloxyalkyl, Alkanoyloxyalkoxy.

Im Falle chiraler Verbindungen der Formel I ist vorzugsweise ist R¹ ein chiaraler Rest und R² ein nicht chiraler Rest oder R¹ ein nicht chiraler Rest und R² ein chiraler Rest. Vorzugsweise ist ferner der chirale Rest an einen aromatischen Ring gebunden.

Bevorzugte Reste R¹ und/oder R² mit chiralen Kohlenstoffatomen sind die Gruppen der allgemeinen Formel 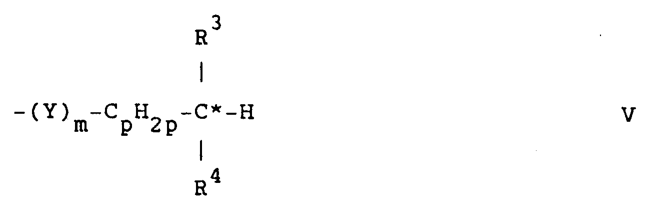
worin m für die Zahl 0 oder 1 und p für eine ganze Zahl von 0-6 stehen; R³ Alkyl und R⁴ Halogen, Alkoxy oder von R³ verschiedenes Alkyl bedeuten; Y die Gruppe -CH₂-, -O-, -CO-, -COO- oder -OOC- bezeichnet; und C* das chirale Kohlenstoffatom bedeutet.

Besonders bevorzugte chirale Reste R¹ und/oder R² sind die Gruppen der Formel V, worin R³ Methyl und R⁴ von Methyl verschiedenes Alkyl, beispielsweise Aethyl bedeuten oder R³ Alkyl und R⁴ Halogen bedeuten. Vorzugsweise steht Y in Formel V für -CH₂-, -O- oder -COO-, insbesondere für -CH₂- oder -O-.

Beispiele besonders bevorzugter chiraler Reste sind die chiralen Alkylgruppen, wie 2-Methylbutyl, 2-Methylpentyl, 3-Methylpentyl, 2-Methylhexyl, 3-Methylhexyl, 4-Methylhexyl, 1-Methylheptyl, 2-Methylheptyl, 3-Methylheptyl, 4-Methylheptyl, 5-Methylheptyl, 6-Methyloctyl, 7-Methylnonyl und 8-Methyldecyl; die chiralen Alkoxygruppen, wie 1-Methylbutyloxy, 2-Methylbutyloxy, 2-Methylpentyloxy, 3-Methylpentyloxy, 4-Methylhexyloxy, 1-Methylheptyloxy, 5-Methylheptyloxy, 6-Methyloctyloxy, 7-Methyloctyloxy und 8-Methyldecyloxy; die chiralen Alkanoylgruppen, wie 3-Methylpentanoyl, 4-Methylhexanoyl, 5-Methylheptanoyl und 6-Methyloctanoyl; die chiralen Alkanoyloxygruppen, wie 3-Methylpentanoyloxy, 4-Methylhexanoyloxy, 5-Methylheptanoyloxy und 6-Methyloctanoyloxy; die chiralen Alkoxycarbonylgruppen, wie 1-Methylbutyloxycarbonyl, 2-Methylbutyloxycarbonyl, 3-Methylpentyloxycarbonyl, 4-Methylhexyloxycarbonyl 1-Methylheptyloxycarbonyl, 5-Methylheptyloxycarbonyl und 6-Methyloctyloxycarbonyl; die chiralen Halogenalkoxygruppen, wie 2-Chlorpropyloxy, 2-Fluorpropyloxy, 2-Chlorbutyloxy, 2-Fluorbutyloxy, 2-Chlorpentyloxy, 2-Fluorpentyloxy, 2-Chlorhexyloxy, 2-Fluorhexyloxy, 2-Chloroctyloxy und 2-Fluoroctyloxy; die chiralen Halogenoalkoxycarbonylgruppen, wie 2-Chlorpropyloxycarbonyl, 2-Fluorpropyloxycarbonyl, 2-Chlorbutyloxycarbonyl, 2-Chlorpentyloxycarbonyl, 2-Chlorhexyloxycarbonyl und 2-Chlorheptyloxycarbonyl; und die chiralen Halogenoalkanoyloxygruppen, wie 2-Chlorpropanoyloxy, 2-Fluorpropanoyloxy, 2-Chlorbutanoyloxy, 2-Fluorbutanoyloxy, 3-Chlorbutanoyloxy, 3-Fluorbutanoyloxy, 2-Chlorpentanoyloxy, 2-Fluropentanoyloxy, 3-Chlorpentanoyloxy, 3-Fluorpentanoyloxy, 2-Chlorhexanoyloxy, 2-Fluorhexanoyloxy, 3-Chlorhexanoyloxy, 3-Fluorhexanoyloxy, 2-Chlorheptanoyloxy, 2-Fluorheptanoyloxy, 3-Chlorheptanoyloxy und 3-Fluorheptanoyloxy.

Beispiele besonders bevorzugter nicht chiraler, geradkettiger oder verzweigter Reste sind die Alkylgruppen, wie Pentyl, Isopentyl, Hexyl, Isohexyl, Heptyl, Octyl, Nonyl, Decyl, Undecyl und Dodecyl; die Alkoxygruppen, wie Pentyloxy, Isopentyloxy, Hexyloxy, Heptyloxy, Octyloxy, Nonyloxy, Decyloxy, Undecyloxy und Dodecyloxy; die Alkanoylgruppen, wie Pentanoyl, Hexanoyl, Heptanoyl, Octanoyl, Nonanoyl, Decanoyl, Undecanoyl und Dodecanoyl; die Alkanoyloxygruppen, wie Butanoyloxy, Pentanoyloxy, Hexanoyloxy, Heptanoyloxy, Octanoyloxy, Nonanoyloxy und Decanoyloxy; und die Alkoxycarbonylgruppen, wie Propyloxycarbonyl, Isopropyloxycarbonyl, Butyloxycarbonyl, Pentyloxycarbonyl, Hexyloxycarbonyl, Heptyloxycarbonyl, Octyloxycarbonyl, Nonyloxycarbonyl und Decyloxycarbonyl.

R¹ und R² besitzen zweckmässigerweise höchstens je 18 Kohlenstoffatome, vorzugsweise etwa 4-15 und besonders bevorzugt etwa 5-12 Kohlenstoffatome. Ferner besitzen die Verbindungen der Formeln I und III in R¹ und R² zusammen vorzugsweise mindestens 8, insbesondere mindestens 10 und besonders bevorzugt mindestens 12 Kohlenstoffatome.

Diejenigen Verbindungen der obigen Formel I, worin R¹ und R² zusammen mindestens 8 Kohlenstoffatome aufweisen und Ring A¹ trans-m-Dioxan-2,5-diyl, die Ringe A² und A³ unsubstituiertes 1,4-Phenylen, X¹ eine einfache Kovalenzbindung und R² Alkoxy bedeuten, sind neu und bilden ebenfalls Gegenstand der vorliegenden Erfindung. Diese Verbindungen der Formel I, welche in R¹ und R² zusammen mindestens 8, vorzugsweise mindestens 10 und besonders bevorzugt mindestens 12 Kohlenstoffatome aufweisen, besitzen im allgemeinen selbst eine enantiotrope smektisch C und/oder smektisch A Phase. Bevorzugte erfindungsgemässe Verbindungen sind die Verbindungen gemäss den oben aufgeführten bevorzugten Aspekten, welche die angegebene Anzahl Kohlenstoffatome in R¹ und R² zusammen aufweisen. Beispiele bevorzugter erfindungsgemässer Verbindungen sind die in den Synthesebeispielen genannten Verbindungen. Besonders bevorzugt sind die Verbindungen der obigen Formel III, worin X¹ eine einfache Kovalenzbindung bezeichnet, R² Alkoxy bedeutet und R¹ und R² zusammen mindestens 8 Kohlenstoffatome aufweisen. R¹ steht in Formel III vorzugsweise für Alkyl.

Die Verbindungen der Formel I mit kürzeren Resten R¹ und R² besitzen im allgemeinen keine enantiotropen smektisch C oder smektisch A Phasen, sind aber ebenfalls als Komponenten für ferroelektrische Gemische geeignet.

Die Verbindungen der Formel I können nach üblichen Methoden zur Herstellung von Dioxanen, beispielsweise nach den in den Synthesebeispielen illustrierten Methoden erhalten werden. Geeignete Verbindungen zur Einführung der chiralen Reste sind in grosser Zahl bekannt oder können nach üblichen Methoden aus bekannten chiralen Verbindungen, z.B. Aminosäuren, α-Hydroxycarbonsäuren, β-Hydroxycarbonsäuren erhalten werden.

Die Herstellung der erfindungsgemässen flüssigkristallinen Gemische und die Verwendung in elekro-optischen Vorrichtungen kann ebenfalls in an sich bekannter Weise erfolgen.

Die Verbindungen der Formel I können untereinander und/oder mit üblichen für ferroelektrische Gemische geeigneten Materialien gemischt werden. Die erfindungsgemässen Gemische können somit eine oder mehrere Verbindungen der Formel I und einen oder mehrere weitere Zusätze enthalten oder lediglich aus zwei oder mehreren Verbindungen der Formel I bestehen. Zweckmässigerweise enthält das Gemisch eine oder mehrere Verbindungen, welche selbst ferroelektrische Eigenschaften aufweisen, in geeigneter Menge.

Die erfindungsgemässen Flüssigkristallmischungen mit ferroelektrischen Eigenschaften können neben einer oder mehreren Verbindungen der Formel I übliche Komponenten für chiral smektische Gemische enthalten. Vorzugsweise enthalten sie eine oder mehrere Verbindungen aus der Gruppe der allgemeinen Formeln 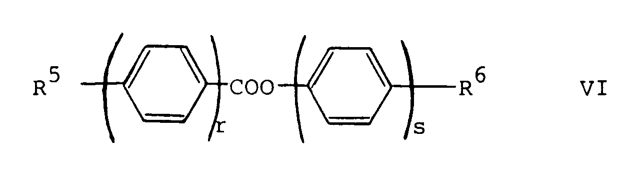 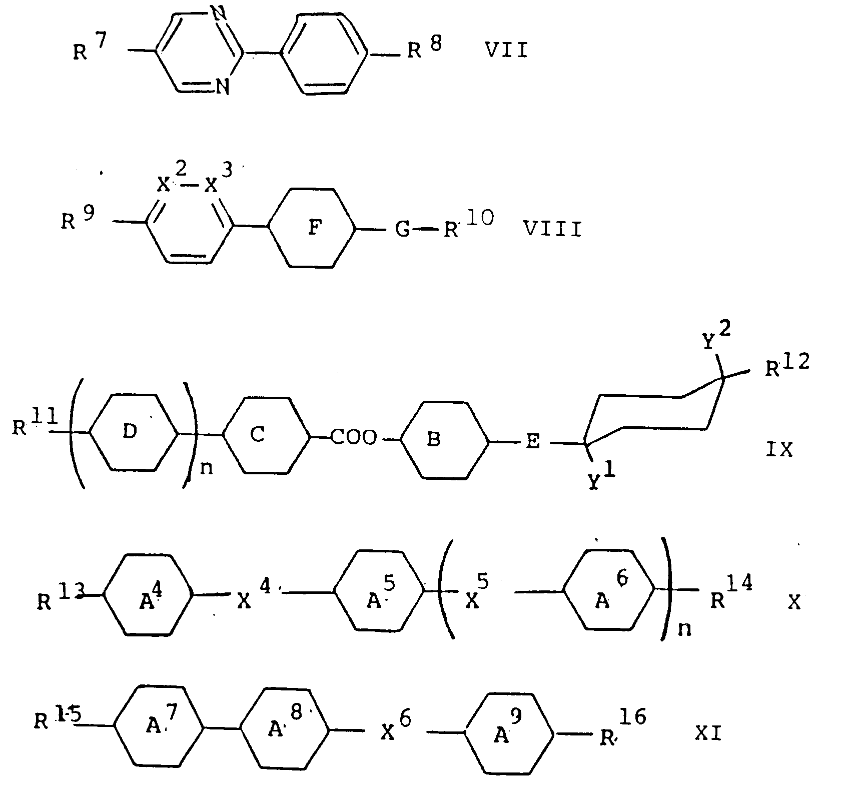
worin R⁵ und R⁶ Alkyl, Alkoxy, Alkanoyl, Alkanoyloxy, Alkoxycarbonyl oder Alkoxycarbonyloxy mit bis zu 18 Kohlenstoffatomen bedeuten; r und s unabhängig voneinander 1 oder 2 bedeuten; R⁷ und R⁸ Alkyl oder Alkoxy mit 1-18 Kohlenstoffatomen darstellen; X² für CH und X³ für N steht oder X² für N und X³ für CH steht; G eine einfache Kovalenzbindung, trans-1,4-Cyclohexylen, cis-4-Cyano-trans-1,4-cyclohexylen oder gegebenenfalls mit Halogen oder Methyl substituiertes 1,4-Phenylen bedeutet; Ring F trans-1,4-Cyclohexylen, gegebenenfalls mit Halogen oder Methyl substituiertes 1,4-Phenylen oder, wenn G eine einfache Kovalenzbindung bedeutet, auch cis-4-Cyano-trans-1,4-cyclohexylen darstellt; R⁹ und R¹⁰, je eine gegebenenfalls halogensubstituierte Alkyl- oder Alkenylgruppe bezeichnen, in welcher gegebenenfalls eine oder zwei nicht benachbarte CH₂-Gruppen durch -O-, -COO- und/oder -OOC- ersetzt sind; n für die Zahl 0 oder 1 steht; E eine einfache Kovalenzbindung, -CH₂-CH₂-, -OCH₂-, -COO- oder -OOC- bedeutet; die Ringe B, C und D gegebenenfalls mit Cyano, Halogen oder Niederalkyl substituiertes 1,4-Phenylen bezeichnen; Y¹ und Y² Wasserstoff bedeuten oder einer der Substituenten Y¹ und Y² auch Cyano bedeutet; R¹¹ und R¹² unabhängig voneinander gegebenenfalls halogensubstituiertes C₁-C₁₈-Alkyl oder gegebenenfalls halogensubstituiertes C₂-C₁₈-Alkenyl darstellen, in welchen gegebenenfalls eine oder zwei nicht benachbarte CH₂-Gruppen durch Sauerstoff ersetzt sind; X⁴ eine einfache Kovalenzbindung, -COO- oder -OOC- und X⁵ eine einfache Kovalenzbindung, -COO-, -OOC-, -CH₂CH₂-, -OCH₂- oder -CH₂O- darstellen; die Ringe A⁴, A⁵ und A⁶ unabhängig voneinander unsubstituiertes oder mit Cyano, Halogen oder Niederalkyl substituiertes 1,4-Phenylen oder einer der Ringe auch Pyrimidin-2,5-diyl oder Pyrazin-2,5-diyl bedeutet und/oder, wenn n für die Zahl 1 steht, einer der Ringe auch trans-1,4-Cyclohexylen oder trans-m-Dioxan-2,5-diyl bedeutet; R¹³ eine gegebenenfalls halogensubstituierte Alkenylgruppe mit bis zu 18 Kohlenstoffatomen bedeutet, worin gegebenenfalls 1 oder 2 nicht benachbarte CH₂-Gruppen durch -O-, -CO-, -COO- oder -OOC- ersetzt sind und/oder gegebenenfalls eine C-C-Einfachbindung durch eine C-C-Doppelbindung ersetzt ist; R¹⁴ eine gegebenenfalls halogensubstituierte Alkylgruppe mit bis zu 18 Kohlenstoffatomen bedeutet, worin gegenbenenfalls 1 oder 2 nicht benachbarte CH₂-Gruppen durch -O-, -CO-, -COO- oder -OOC- ersetzt sind und/oder gegebenenfalls eine C-C-Einfachbindung durch eine C-C-Doppelbindung ersetzt ist; X⁶ eine einfache Kovalenzbindung, -COO-, -OOC-, -CH₂CH₂-, -OCH₂- oder -CH₂O- bezeichnet; einer der Ringe A⁷, A⁸ und A⁹ Pyrimidin-2,5-diyl darstellt, einer der Ringe A⁷, A⁸ und A⁹ unsubstituiertes oder mit Cyano, Halogen oder Niederalkyl substituiertes 1,4-Phenylen darstellt und einer der Ringe A⁷, A⁸ und A⁹ trans-1,4-Cyclohexylen oder unsubstituiertes oder mit Cyano, Halogen oder Niederalkyl substituiertes 1,4-Phenylen darstellt; und R¹⁵ und R¹⁶ unabhängig voneinander eine gegebenenfalls halogensubstituierte Alkylgruppe mit bis zu 18 Kohlenstoffatomen bedeuten, worin gegebenenfalls 1 oder 2 nicht benachbarte CH₂-Gruppen durch -O-, -CO-, -COO- und/oder -OOC- ersetzt sind.

Die erfindungsgemässen, chiral smektischen Gemische können grundsätzlich aus optisch inaktiven Verbindungen bestehen. Vorzugsweise enthalten sie jedoch eine oder mehrere optisch aktive Verbindungen zwecks Erzielung einer spontanen Polarisation, d.h. sie enthalten vorzugsweise mindestens eine optisch aktive Verbindung der Formel I mit chiralem Kohlenstoffatom in R¹ und/oder R² und/oder mindestens einen optisch aktiven Zusatz. Bevorzugte, chiral smektische Gemische mit mindestens 2 Komponenten sind somit diejenigen, worin mindestens eine Komponente eine optisch aktive Verbindung der Formel I ist, und eine zweite Komponente optisch aktiv oder optisch inaktiv sein kann, sowie diejenigen, worin mindestens eine Komponente eine optisch inaktive, vorzugsweise achirale Verbindung der Formel I ist und eine zweite Komponente optisch aktiv ist. Die zweite Komponente ist vorzugsweise eine weitere Verbindung der Formel I oder eine Verbindung der Formeln VI-XI.

Besonders geeignete Zusätze zur Erzielung einer hohen spontanen Polarisation sind die optisch aktiven Verbindungen der allgemeinen Formel 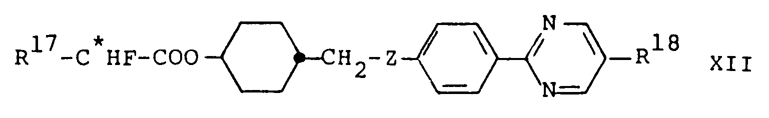
worin C* ein chirales Kohlenstoffatom bezeichnet, Z eine Methylengruppe oder Sauerstoff darstellt, und R¹⁷ und R¹⁸ unabhängig voneinander Alkyl bedeuten.

Die Verbindungen der Formel XII können nach der in den Synthesebeispielen illustrierten Methode hergestellt werden. R¹⁷ und R¹⁸ stehen zweckmässig für C₁-C₁₈-Alkyl, vorzugsweise für C₅-C₁₂-Alkyl. Der Anteil an Verbindungen der Formel I in den erfindungsgemässen Gemischen kann in breiten Grenzen variieren und beispielsweise etwa 1-100 Gew.-% betragen. Im allgemeinen ist jedoch ein Anteil von etwa 10-60 Gew.-% an Verbindungen der Formel I bevorzugt.

Die Erfindung wird durch die folgenden Beispiele weiter veranschaulicht. Die Enantiomere der angegebenen Verbindungen besitzen jeweils die gleichen Phasenumwandlungstemperaturen und die gleiche Verdrillung aber von entgegengesetztem Vorzeichen. Die zur Charakterisierung der Phasenumwandlungen verwendeten Abkürzungen besitzen folgende Bedeutungen:
- C: für kristallin
- S: für smektisch
- S_{A}: für smektisch A
- S_{B}: für smektisch C
- S_{C}: für smektisch C
- S_{C}*: für chiral smektisch C
- Ch: für cholesterisch
- N: für nematisch
- I: für isotrop.

### Beispiel 1

a) Eine Suspension von 21,06 g 4-Biphenylyl-p-toluolsulfonat in 120 ml Dichlormethan wurde bei -2°C unter Rühren mit 23,6 ml Titantetrachlorid versetzt. Das Gemisch wurde bei gleicher Temperatur innert 30 Minuten tropfenweise mit 9,63 ml Dichlormethyl-methyläther versetzt, noch 1 Stunde bei Raumtemperatur gerührt und dann auf Eis gegossen. Die wässrige Phase wurde abgetrennt und mit Dichlormethan extrahiert. Die vereinigten organischen Phasen wurden mit gesättigter Natriumhydrogencarbonat-Lösung und dann mit Wasser gewaschen, über Natriumsulfat getrocknet und eingeengt. Umkristallisation des erhaltenen Rohprodukts aus 50 ml Aethylacetat ergab 11,65 g 4ʹ-(p-Toluolsulfonyloxy)biphenyl-4-carboxaldehyd.
b) Eine Lösung von 2,82 g 4ʹ-(p-Toluolsulfonyloxy)biphenyl-4-carboxaldehyd und 1,54 g 2-Hexyl-1,3-propandiol in 50 ml Toluol wurde mit 3 Tropfen 10%-iger (Vol.) Schwefelsäure versetzt. Das Gemisch wurde 1,5 Stunden zum Sieden erhitzt, wobei ca. 50 ml feuchtes Toluol abdestilliert und gleichzeitig 30 ml frisches Toluol zugetropft wurden. Dann wurden 10 Tropfen Triäthylamin zum Reaktionsgemisch zugegeben. Nach dem Erkalten wurde das Gemisch mit 10 ml 1N Natriumhydrogencarbonat-Lösung und dreimal mit je 20 ml Wasser gewaschen, über Natriumsulfat getrocknet und eingeengt. Das erhaltene rohe 5-Hexyl-2-[4ʹ-(p-toluolsulfonyloxy)-4-biphenylyl]-m-dioxan (4,26 g) wurde in 160 ml siedendem Aethanol gelöst. Die Lösung wurde mit einer Lösung von 2,64 g Kaliumhydroxid in 27 ml Wasser versetzt und unter Rühren 1,8 Stunden zum Sieden erhitzt. Das Reaktionsgemisch wurde nach dem Erkalten mit 1,9 ml Eisessig (bis pH 6) neutralisiert und auf ca. 20 ml eingeengt. Die erhaltene Suspension wurde mit 80 ml Dichlormethan verdünnt und die organische Phase zweimal mit je 20 ml Wasser gewaschen, über Natriumsulfat getrocknet und eingeengt. Chromatographie des Rückstandes (2.80 g) an 50 g Kieselgel mit Toluol/Aceton (Vol. 19:1) ergab 1,94 g 5-Hexyl-2-(4ʹ-hydroxy-4-biphenylyl)-m-dioxan.
c) Eine Lösung von 1,36 g 5-Hexyl-2-(4ʹ-hydroxy-4-biphenylyl)-m-dioxan und 1,43 g (S)-1-Brom-4-methylhexan in 32 ml N,N-Dimethylformamid wurde mit 1,38 g fein pulverisiertem Kaliumcarbonat versetzt und das Gemisch über Nacht bei 58°C gerührt. Die Suspension wurde genutscht und das Filtrat im Vakuum eingeengt. Eine Lösung des Rückstands in 40 ml Diäthyläther wurde zweimal mit je 15 ml Wasser gewaschen, über Natriumsulfat getrocknet und eingeengt. Chromatographie des Rohproduktes an 30 g Kieselgel mit Hexan/Aethylacetat (Vol. 24:1) ergab 1,58 g festes (S)-5-Hexyl-2-[4ʹ-(4-methylhexyloxy) -4-biphenylyl]-m-dioxan als cis/trans-Gemisch. Zweimalige Umkristallisation aus Aethylacetat bei -20°C ergab die reine trans-Verbindung; Smp. (C-S) 58,6°C, Phasenübergang (S-S_{C}*) 120,8°C, und (S_{C}*-Ch) 140,2°C, Klp. (Ch-I) 157°C.

In analoger Weise können folgende Verbindungen hergestellt werden:
(S)-trans-5-Pentyl-2-[4ʹ-(4-methylhexyloxy)-4-biphenylyl]-m-dioxan, Smp. (C-S) ca. 85°C, Phasenübergänge (S-S) 95°C, (S-S_{C}*) 130,5°C und (S_{C}*-Ch) 135,5°C, Klp. (Ch-I) 161°C;
(S)-trans-5-Heptyl-2-[4ʹ-(4-methylhexyloxy)-4-biphenylyl]-m-dioxan, Smp. (C-S) 65,8°C, Phasenübergänge (S-S) 100°C, (S-S_{C}*) 117,3°C und (S_{C}*-Ch) 147°C, Klp. (Ch-I) 159°C;
(S)-trans-5-Nonyl-2-[4ʹ-(4-methylhexyloxy)-4-biphenylyl]-m-dioxan, Smp. (C-S) 35,2°C, Phasenübergänge (S-S) 51,6°C, (S-S_{C}*) 136,5°C, (S_{C}*-S_{A}) 152°C und (S_{A}-Ch) 152,5°C, Klp. (Ch-I) 155,5°C;
(S)-trans-5-Nonyl-2-[4ʹ-(2-methylbutyloxy)-4-biphenylyl]-m-dioxan, Smp. (C-S) 60,5°C, Phasenübergang (S-S_{A}) 142,2°C, Klp. (S_{A}-I) 147,5°C;
(S)-trans-5-Pentyl-2-[4ʹ-(6-methyloctyloxy)-4-biphenylyl]-m-dioxan;
(S)-trans-5-Hexyl-2-[4ʹ-(6-methyloctyloxy)-4-biphenylyl]-m-dioxan;
(S)-trans-5-Heptyl-2-[4'-(6-methyloctyloxy)-4-biphenylyl]-m-dioxan;
(S)-trans-5-Octyl-2-[4'-(6-methyloctyloxy)-4-biphenylyl]-m-dioxan;
(S)-trans-5-Nonyl-2-[4'-(6-methyloctyloxy)-4-biphenylyl]-m-dioxan;
(S)-trans-5-(3-Methylpentyl)-2-(4'-decyloxy-4-biphenylyl]-m-dioxan;
trans-5-Heptyl-2-(4'-heptyloxy-4-biphenylyl)-m-dioxan, Smp. (C-S) 66,5°C, Phasenübergänge (S-S) 93°C, (S-S_{C}) 122°C, (S_{C}-N) 153°C, Klp. (N-I) 173°C;
trans-5-Hexyl-2-(4'-octyloxy-4-biphenylyl)-m-dioxan, Smp. (C-S) 72,5°C, Phasenübergänge (S-S) 108,2°C, (S-S_{C}) 123°C, (S_{C}-N) 146,5°C, Klp. (N-I) 168°C;
trans-5-Heptyl-2-(4'-octyloxy-4-biphenylyl)-m-dioxan, Smp. (C-S) 65,5°C, Phasenübergänge (S-S) 96,7°C, (S-S_{C}) 123°C, (S_{C}-N) 155°C, Klp. (N-I) 170,2°C;
trans-5-Nonyl-2-(4'-octyloxy-4-biphenylyl)-m-dioxan, Smp. (C-S) 65,8°C, Phasenübergänge (S-S) 142°C, (S-N) 163°C, Klp. (N-I) 168,5°C.

## Patentansprüche

1. Flüssigkristallines Gemisch mit ferroelektrischen Eigenschaften enthaltend mindestens 2 Komponenten, dadurch gekennzeichnet, dass mindestens eine Komponente eine Verbindung der allgemeinen Formel 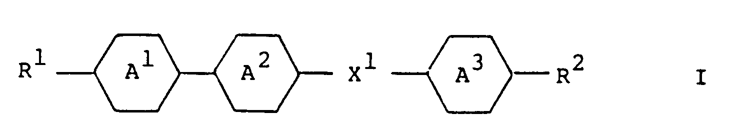 worin X¹ eine einfache Kovalenzbindung, -COO-, -OOC-, -CH₂CH₂-, -OCH₂- oder -CH₂O- bezeichnet; einer der Ringe A¹, A² und A³ trans-m-Dioxan-2,5-diyl darstellt, und die beiden andern der Ringe A¹, A² und A³ unabhängig voneinander unsubstituiertes oder mit Cyano, Halogen oder Niederalkyl substituiertes 1,4-Phenylen darstellen; R¹ und R² unabhängig voneinander eine gegebenenfalls halogensubstituierte Alkylgruppe mit bis zu 18 Kohlenstoffatomen bedeuten, worin gegebenenfalls 1 oder 2 nicht benachbarte CH₂-Gruppen durch -O-, -CO-, -COO-, und/oder -OOC-ersetzt sind,
ist.

2. Flüssigkristallines Gemisch nach Anspruch 1, dadurch gekennzeichnet, dass es mindestens eine optisch aktive Verbindung der Formel I enthält, worin R¹ und/oder R² ein chirales Kohlenstoffatom aufweist.

3. Flüssigkristallines Gemisch nach Anspruch 1 oder 2, dadurch gekennzeichnet, dass einer der Ringe A¹ und A² trans-m-Dioxan-2,5-diyl darstellt, der andere der Ringe A¹ und A² unsubstituiertes oder mit Cyano, Halogen oder Niederalkyl substituiertes 1,4-Phenylen bedeutet und Ring A³ für unsubstituiertes oder mit Cyano, Halogen oder Niederalkyl substituiertes 1,4-Phenylen steht.

4. Flüssigkristallines Gemisch nach einem der Ansprüche 1 bis 3, dadurch gekennzeichnet, dass Ring A¹ trans-m-Dioxan-2,5-diyl darstellt, Ring A² unsubstituiertes oder mit Cyano, Halogen oder Niederalkyl substituiertes 1,4-Phenylen bedeutet und Ring A³ für unsubstituiertes oder mit Cyano, Halogen oder Niederalkyl substituiertes 1,4-Phenylen steht.

5. Flüssigkristallines Gemisch nach einem der Ansprüche 1 bis 4, dadurch gekennzeichnet, dass es eine oder mehrere Verbindungen der allgemeinen Formel 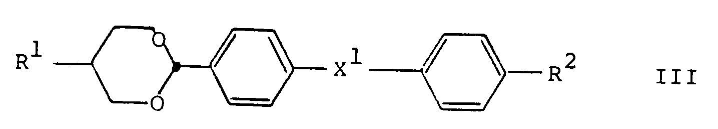 worin X¹, R¹ und R² die in Anspruch 1 gegebenen Bedeutungen haben,
enthält.

6. Flüssigkristallines Gemisch nach Anspruch 5, dadurch gekennzeichnet, dass X¹ eine einfache Kovalenzbindung oder -OOC- bezeichnet.

7. Flüssigkristallines Gemisch nach einem der Ansprüche 2 bis 6, dadurch gekennzeichnet, dass es mindestens eine optisch aktive Verbindung der Formel I enthält, und der Rest R¹ und/oder R² mit chiralem Kohlenstoffatom eine Gruppe der allgemeinen Formel 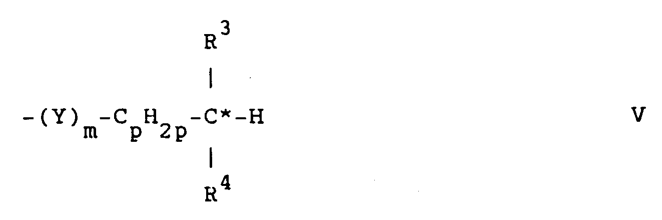 worin m für die Zahl 0 oder 1 und p für eine ganze Zahl von 0-6 stehen; R³ Alkyl und R⁴ Halogen, Alkoxy oder von R³ verschiedenes Alkyl bedeuten; Y die Gruppe -CH₂-, -O-, -CO-, -COO-, oder -OOC- bezeichnet; und C* das chirale Kohlenstoffatom bedeutet,
ist.

8. Flüssigkristallines Gemisch nach Anspruch 7, dadurch gekennzeichnet, dass R³ Methyl und R⁴ von Methyl verschiedenes Alkyl bedeuten oder R³ Alkyl und R⁴ Halogen bedeuten.

9. Flüssigkristallines Gemisch nach einem der Ansprüche 1 bis 8, dadurch gekennzeichnet, dass R¹ und R² unabhängig voneinander achirales, vorzugsweise geradkettiges Alkyl, Alkoxy, Alkanoyl, Alkanoyloxy oder Alkoxycarbonyl bedeuten oder, dass einer der Reste R¹ und R² chirales, gegebenenfalls halogensubstituiertes Alkyl, Alkoxy, Alkanoyl, Alkanoyloxy oder Alkoxycarbonyl bedeutet und der andere der Reste R¹ und R² chirales oder nicht chirales, gegebenenfalls halogensubstituiertes Alkyl, Alkoxy, Alkanoyl, Alkanoyloxy oder Alkoxycarbonyl bedeutet.

10. Flüssigkristallines Gemisch nach einem der Ansprüche 1 bis 9, dadurch gekennzeichnet, dass R¹ Alkyl und R² Alkoxy bedeuten.

11. Flüssigkristallines Gemisch nach einem der Ansprüche 1 bis 10, dadurch gekennzeichnet, dass R¹ und R² unabhängig voneinander je 4-15, vorzugsweise je 5-12 Kohlenstoffatome aufweisen.

12. Verwendung des in den Ansprüchen 1 bis 11 definierten flüssigkristallinen Gemisches für elektro-optische Zwecke.

13. Verbindungen der allgemeinen Formel 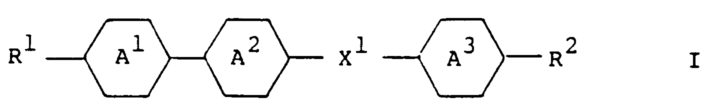 worin X¹ eine einfache Kovalenzbindung, -CH₂CH₂-, -OCH₂- oder -CH₂O- bezeichnet; der Ring A¹ trans-m-Dioxan-2,5-diyl darstellt, und die Ringe A² und A³ 1,4-Phenylen darstellen; R¹ und R² unabhängig voneinander eine gegebenenfalls halogensubstituierte Alkylgruppe mit bis zu 18 Kohlenstoffatomen bedeuten, worin gegebenenfalls 1 oder 2 nicht benachbarte CH₂-Gruppen durch -O-, -CO-, -COO- und/oder -OOC-ersetzt sind; mit der Massgabe, dass wenn X¹ eine einfache Kovalenzbindung bedeutet, R² Alkoxy bedeutet; and mit der weiteren Massgabe, dass die Summe der Kohlenstoffatome in R¹ und R² zusammen mindestens 8 beträgt.

14. Optisch aktive Verbindungen nach Anspruch 13, dadurch gekennzeichnet, dass R¹ und/oder R² ein chirales Kohlenstoffatom aufweist.

15. Verbindungen nach Anspruch 13, dadurch gekennzeichnet, dass X¹ eine einfache Kovalenzbindung bezeichnet.

16. Optisch aktive Verbindungen nach einem der Ansprüche 13 bis 15, dadurch gekennzeichnet, dass der Rest R¹ und/oder R² mit chiralem Kohlenstoffatom eine Gruppe der allgemeinen Formel 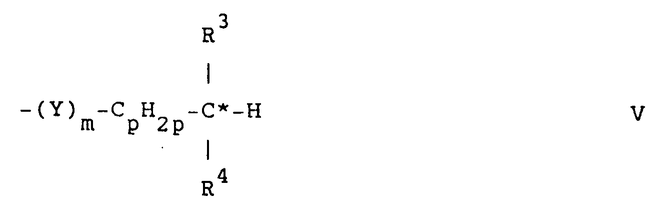 worin m für die Zahl 0 oder 1 und p für eine ganze Zahl von 0-6 stehen; R³ Alkyl und R⁴ Halogen, Alkoxy oder von R³ verschiedenes Alkyl bedeuten; Y die Gruppe -CH₂-, -O-, -CO-, -COO- oder -OOC- bezeichnet; und C* das chirale Kohlenstoffatom bedeutet,
ist.

17. Optisch aktive Verbindungen nach Anspruch 16, dadurch gekennzeichnet, dass R³ Methyl und R⁴ von Methyl verschiedenes Alkyl bedeuten oder R³ Alkyl und R⁴ Halogen bedeuten.

18. Verbindungen nach einem der Ansprüche 13 bis 17, dadurch gekennzeichnet, dass R¹ Alkyl und R² Alkoxy bedeuten.

19. Verbindungen nach einem der Ansprüche 13 bis 18, dadurch gekennzeichnet, dass R¹ und R² unabhängig voneinander je 4-15, vorzugsweise je 5-12 Kohlenstoffatome aufweisen.

20. Verbindungen nach einem der Ansprüche 13 bis 19, dadurch gekennzeichnet, dass die Summe der Kohlenstoffatome in R¹ und R² zusammen mindestens 10, vorzugsweise mindestens 12 beträgt.

## Claims

1. A liquid crystalline mixture with ferroelectric properties containing at least 2 components, characterized in that at least one component is an optically active compound of the general formula 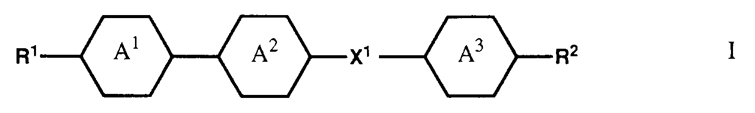 wherein X¹ denotes a single covalent bond, -COO-, -OOC-, -CH₂CH₂-, -OCH₂- or -CH₂O-; one of rings A¹, A² and A³ represents trans-m-dioxane-2,5-diyl and the other two of rings A¹, A² and A³ each independently represent unsubstituted 1,4-phenylene or 1,4-phenylene substituted with cyano, halogen or lower alkyl; R¹ and R² each independently signify an optionally halogen-substituted alkyl group with up to 18 carbon atoms in which optionally 1 or 2 non-adjacent CH₂ groups is/are replaced by -O-, -CO-, -COO- and/or -OOC-.

2. A liquid crystalline mixture according to claim 1, characterized in that it contains at least one optically active compound of formula I in which R¹ and/or R² has a chiral carbon atom.

3. A liquid crystalline mixture according to claim 1 or 2, characterized in that one of rings A¹ and A² represents trans-m-dioxane-2,5-diyl, the other of rings A¹ and A² signifies unsubstituted 1,4-phenylene or 1,4-phenylene substituted with cyano, halogen or lower alkyl and ring A³ stands for unsubstituted 1,4-phenylene or 1,4-phenylene substituted with cyano, halogen or lower alkyl.

4. A liquid crystalline mixture according to any one of claims 1 to 3, characterized in that ring A¹ represents trans-m-dioxane-2,5-diyl, ring A² signifies unsubstituted 1,4-phenylene or 1,4-phenylene substituted with cyano, halogen or lower alkyl and ring A³ stands for unsubstituted 1,4-phenylene or 1,4-phenylene substituted with cyano, halogen or lower alkyl.

5. A liquid crystalline mixture according to any one of claims 1 to 4, characterized in that contains one or more compounds of the general formula 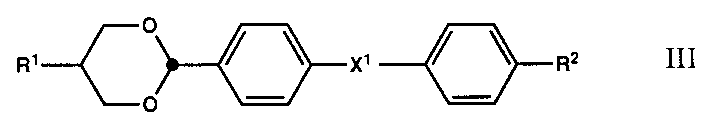 wherein X¹, R¹ and R² have the significances given in claim 1.

6. A liquid crystalline mixture according to claim 5, characterized in that X¹ denotes a single covalent bond or -OOC-.

7. A liquid crystalline mixture according to any one of claims 2 to 6, characterized in that it contains at least one optically active compound of formula I and the residue R¹ and/or R² having a chiral carbon atom is a group of the general formula 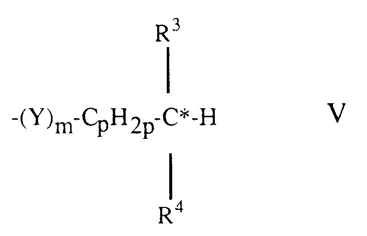 wherein m stands for the number 0 or 1 and p stands for a whole number of 0-6; R³ signifies alkyl and R⁴ signifies halogen, alkoxy or alkyl different from R³; Y denotes the group -CH₂-, -O-, -CO-, -COO- or -OOC-; and C* signifies the chiral carbon atom.

8. A liquid crystalline mixture according to claim 7, characterized in that R³ signifies methyl and R⁴ signifies alkyl different from methyl or R³ signifies alkyl and R⁴ signifies halogen.

9. A liquid crystalline mixture according to any one of claims 1 to 8, characterized in that R¹ and R² each independently signify achiral, preferably straight-chain, alkyl, alkoxy, alkanoyl, alkanoyloxy or alkoxycarbonyl or in that one of the residues R¹ and R² signifies chiral, optionally halogen-substituted alkyl, alkoxy, alkanoyl, alkanoyloxy or alkoxycarbonyl and the other of the residues R¹ and R² signifies chiral or non-chiral, optionally halogen-substituted alkyl, alkoxy, alkanoyl, alkanoyloxy or alkoxycarbonyl.

10. A liquid crystalline mixture according to any one of claims 1 to 9, characterized in that R¹ signifies alkyl and R² signifies alkoxy.

11. A liquid crystalline mixture according to any one of claims 1 to 10, characterized in that R¹ and R² each independently have 4-15, preferably 5-12, carbon atoms.

12. The use of the liquid crystalline mixture defined in claims 1 to 11 for electro-optical purposes.

13. Compounds of the general formula 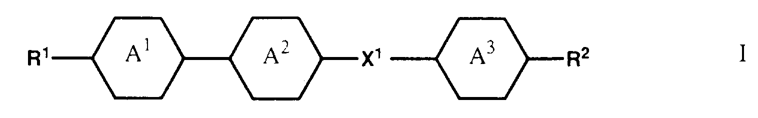 wherein X¹ denotes a single covalent bond, -CH₂CH₂-, -OCH₂- or -CH₂O-; ring A¹ represents trans-m-dioxane-2,5-diyl and rings A² and A³ represent 1,4-phenylene; R¹ and R² each independently signify an optionally halogen-substituted alkyl group with up to 18 carbon atoms in which optionally 1 or 2 non-adjacent CH₂ groups is/are replaced by -O-, -CO-, -COO- and/or -OOC-; with the proviso that R² signifies alkoxy when X¹ signifies a single covalent bond; and with the further proviso that the sum of the carbon atoms in R¹ and R² together amounts to at least 8.

14. Optically active compounds according to claim 13, characterized in that R¹ and/or R² has a chiral carbon atom.

15. Compounds according to claim 13, characterized in that X¹ denotes a single covalent bond.

16. Optically active compounds according to any one of claims 13 to 15, characterized in that the residue R¹ and/or R² having a chiral carbon atom is a group of the general formula 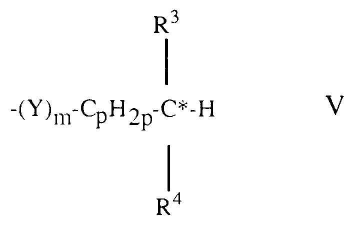 wherein m stands for the number 0 or 1 and p stands for a whole number of 0-6; R³ signifies alkyl and R⁴ signifies halogen, alkoxy or alkyl different from R³; Y denotes the group -CH₂-, -O-, -CO-, -COO- or -OOC-; and C* signifies the chiral carbon atom.

17. Optically active compounds according to claim 16, characterized in that R³ signifies methyl and R⁴ signifies alkyl different from methyl or R³ signifies alkyl and R⁴ signifies halogen.

18. Compounds according to any one of claims 13 to 17, characterized in that R¹ signifies alkyl and R² signifies alkoxy.

19. Compounds according to any one of claims 13 to 18, characterized in that R¹ and R² each independently have 4-15, preferably 5-12, carbon atoms.

20. Compounds according to any one of claims 13 to 19 characterized in that the sum of the carbon atoms in R¹ and R² together amounts to at least 10, preferably at least 12.

## Revendications

1. Composition de cristaux liquides à propriétés ferroélectriques, contenant au moins deux composants, caractérisée en ce qu'au moins un composant est un composé de formule générale 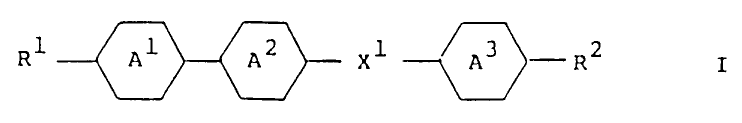 dans laquelle X¹ représente une simple liaison covalente, -COO-, -OOC-, -CH₂CH₂-, -OCH₂- ou -CH₂O-; l'un des cycles A¹, A² et A³ représente le radical *trans*-m-dioxanne-2,5-diyle et les deux autres des cycles A¹, A² et A³ représentent, indépendamment l'un de l'autre, un radical 1,4-phénylène non substitué ou substitué par un atome d'halogène ou par un groupe cyano ou alkyle inférieur; R¹ et R² représentent, indépendamment l'un de l'autre, un groupe alkyle ayant jusqu'à 18 atomes de carbone, éventuellement substitués par un atome d'halogène, dans lequel éventuellement un ou deux groupes CH₂ non contigus sont remplacés par -O-, -CO-, -COO- et/ou -OOC-.

2. Composition de cristaux liquides selon la revendication 1, caractérisée en ce qu'elle contient au moins un composé optiquement actif de formule I dans lequel R¹ et/ou R² comportent un atome de carbone chiral.

3. Composition de cristaux liquides selon la revendication 1 ou 2, caractérisée en ce que l'un des cycles A¹ et A² représente le radical *trans*-m-dioxanne-2,5-diyle, l'autre des cycles A¹ et A² représente un radical 1,4-phénylène non substitué ou substitué par un atome d'halogène ou par un groupe cyano ou alkyle inférieur, et le cycle A³ représente un radical 1,4-phénylène non substitué ou substitué par un atome d'halogène ou par un groupe cyano ou alkyle inférieur.

4. Composition de cristaux liquides selon l'une des revendications 1 à 3, caractérisée en ce que le cycle A¹ représente le radical *trans*-m-dioxanne-2,5-diyle, le cycle A² représente un radical 1,4-phénylène non substitué ou substitué par un atome d'halogène ou par un groupe cyano ou alkyle inférieur, et le cycle A³ représente un radical 1,4-phénylène non substitué ou substitué par un atome d'halogène ou par un groupe cyano ou alkyle inférieur.

5. Composition de cristaux liquides selon l'une des revendications 1 à 4, caractérisée en ce qu'elle contient un ou plusieurs composés de formule générale 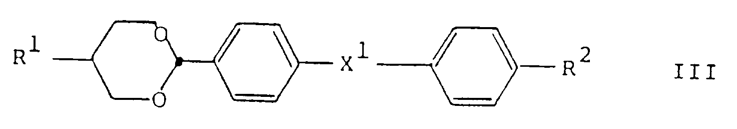 dans laquelle X¹, R¹ et R² ont les significations données dans la revendication 1.

6. Composition de cristaux liquides selon la revendication 5, caractérisée en ce que X¹ représente une simple liaison covalente ou -OOC-.

7. Composition de cristaux liquides selon l'une des revendications 2 à 6, caractérisée en ce qu'elle contient au moins un composé optiquement actif de formule I, et le radical R¹ et/ou R² à atome de carbone chiral est un groupe de formule générale 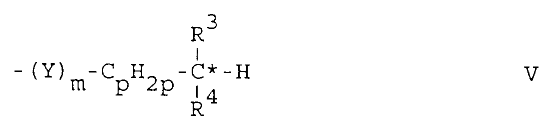 dans laquelle m représente le nombre 0 ou 1 et p représente un nombre entier allant de 0 à 6; R³ représente un groupe alkyle et R⁴ représente un atome d'halogène ou un groupe alcoxy ou un groupe alkyle différent de R³; Y représente le groupe -CH₂-, -O-, -CO-, -COO- ou -OOC-; et C* désigne l'atome de carbone chiral.

8. Composition de cristaux liquides selon la revendication 7, caractérisée en ce que R³ représente le groupe méthyle et R⁴ représente un groupe alkyle différent du groupe méthyle, ou R³ représente un groupe alkyle et R⁴ représente un atome d'halogène.

9. Composition de cristaux liquides selon l'une des revendications 1 à 8, caractérisée en ce que R¹ et R² représentent, indépendamment l'un de l'autre, un groupe alkyle, alcoxy, alcanoyle, alcanoyloxy ou alcoxycarbonyle non chiral, de préférence à chaîne droite, ou en ce que l'un des radicaux R¹ et R² représente un groupe alkyle, alcoxy, alcanoyle, alcanoyloxy ou alcoxycarbonyle chiral, éventuellement substitué par un atome d'halogène, et l'autre des radicaux R¹ et R² représente un groupe alkyle, alcoxy, alcanoyle, alcanoyloxy ou alcoxycarbonyle chiral ou non chiral, éventuellement substitué par un atome d'halogène.

10. Composition de cristaux liquides selon l'une des revendications 1 à 9, caractérisée en ce que R¹ représente un groupe alkyle et R² représente un groupe alcoxy.

11. Composition de cristaux liquides selon l'une des revendications 1 à 10, caractérisée en ce que R¹ et R², indépendamment l'un de l'autre, comportent chacun 4-15, de préférence chacun 5-12 atomes de carbone.

12. Utilisation de la composition de cristaux liquides définie dans les revendications 1 à 11, à des fins électro-optiques.

13. Composés de formule générale 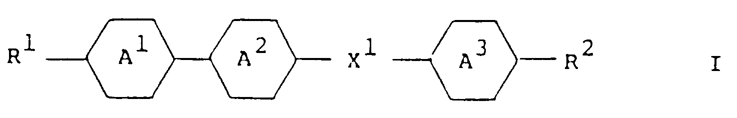 dans laquelle X¹ représente une simple liaison covalente, -CH₂CH₂-, -OCH₂- ou -CH₂O-; le cycle A¹ représente le radical *trans*-m-dioxanne-2,5-diyle et les cycles A² et A³ représentent chacun le radical 1,4-phénylène; R¹ et R² représentent, indépendamment l'un de l'autre, un groupe alkyle ayant jusqu'à 18 atomes de carbone, éventuellement substitué par un atome d'halogène, dans lequel éventuellement un ou deux groupes CH₂ non contigus sont remplacés par -O-, -CO-, -COO-et/ou -OOC-; étant entendu que lorsque X¹ représente une simple liaison covalente, R² représente un groupe alcoxy; et étant entendu en outre que la somme des atomes de carbone dans R¹ et R² pris ensemble est au moins 8.

14. Composés optiquement actifs selon la revendication 13, caractérisés en ce que R¹ et/ou R² comportent un atome de carbone chiral.

15. Composés selon la revendication 13, caractérisés en ce que X¹ représente une simple liaison covalente.

16. Composés optiquement actifs selon l'une des revendications 13 à 15, caractérisés en ce que le radical R¹ et/ou R² à atome de carbone chiral est un groupe de formule générale 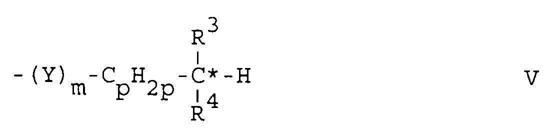 dans laquelle m représente le nombre 0 ou 1 et p représente un nombre entier allant de 0 à 6; R³ représente un groupe alkyle et R⁴ représente un atome d'halogène ou un groupe alcoxy ou un groupe alkyle différent de R³; Y représente le groupe -CH₂-, -O-, -CO-, -COO- ou -OOC-; et C* désigne l'atome de carbone chiral.

17. Composés optiquement actifs selon la revendication 16, caractérisés en ce que R³ représente le groupe méthyle et R⁴ représente un groupe alkyle différent du groupe méthyle, ou R³ représente un groupe alkyle et R⁴ représente un atome d'halogène.

18. Composés selon l'une des revendications 13 à 17, caractérisés en ce que R¹ représente un groupe alkyle et R² représente un groupe alcoxy.

19. Composés selon l'une des revendications 13 à 18, caractérisés en ce que R¹ et R², indépendamment l'un de l'autre, comportent chacun 4-15, de préférence chacun 5-12 atomes de carbone.

20. Composés selon l'une des revendications 13 à 19, caractérisés en ce que la somme des atomes de carbone dans R¹ et R² pris ensemble est au moins 10, de préférence au moins 12.
